# EUROPEAN PATENT APPLICATION

(11) **EP 4 836 369 A1**
(43) Date of publication of application: **04.11.2026**
(21) Application number: 26161457.2
(22) Date of filing: 27.02.2026
(51) Int. Cl.: H04L 45/03, H04L 69/04

(54) **CONFIRMING THE COHERENCY OF LINK STATE DATABASE ENTRIES STORED ON VARIOUS DATA FORWARDING DEVICES RUNNING A NETWORK DISCOVERY PROTOCOL, SUCH AS INTERMEDIATE SYSTEM INTERMEDIATE SYSTEM ("IS IS") FOR EXAMPLE, DISCOVERING THE SOURCE OF ANY INCOHERENCY, AND/OR CORRECTING ANY INCOHERENCY**

(30) Priority: 01.05.2025 US 202563798495 P; 30.06.2025 US 202519255774
(71) Applicant: Juniper Networks, Inc., Sunnyvale, CA 94089-1206 (US)
(72) Inventor: PRZYGIENDA, Antoni B., Sunnyvale, 94089 (US); LI, Anthony Joseph, Sunnyvale, 94089 (US); KATZ, David, Sunnyvale, 94089 (US)
(74) Representative: Marks & Clerk LLP

(57) **Abstract**

An optional, new type of sequence number packets ("SNPs") called Hierarchical SNP ("HSNP") that can compress the traditional exchange of complete sequence number packets ("CSNPs") into a variant of Merkle tree is described. This allows devices (e.g., routers) running the Intermediate System Intermediate System ("IS-IS") interior gateway protocol ("IGP") to support very large databases and adjacency numbers. Such an approach should lead to much faster re-synchronization of link state information in case of inconsistencies since only a subset of packets (compared to full scale CSNP exchange) is necessary to correct the entropy present. The techniques described can be adapted for checking distributed (e.g., link state) database coherency in other contexts, such as in other network discovery protocols.

## Description

### § 1. RELATED APPLICATION(S)

The present application claims benefit to the filing date of U.S. Provisional Application No. 63 63/798,495 (referred to as "the '495 provisional" and incorporated herein by reference), titled "Intermediate System Intermediate System ("IS-IS") Hierarchical Sequence Number Packets ("SNPs")," filed on May 1, 2025 and listing Antoni B. Przygienda, Anthony Joseph Li, and David Katz as the inventors. The scope of the present application is not limited to any requirements of the specific embodiments in the '495 provisional.

### § 2. FIELD AND BACKGROUND

The presently disclosed techniques concern network communications. For example, the presently disclosed techniques may be used in the context of synchronizing link state databases in data forwarding devices running a network discovery protocol, such as an Interior Gateway Protocol ("IGP") like the Intermediate System-to-Intermediate System ("IS-IS") protocol for example.

The discussion in this section should not be construed as an admission of prior art.

Intermediate System to Intermediate System ("IS-IS") is an Interior Gateway Protocol ("IGP") used to efficiently ensure reachability of addresses within a computer network. At present, IS-IS plays a crucial role in large-scale networks like those used by Internet service providers ("ISPs"). IS-IS is described in the documents: "Intermediate System to Intermediate System intra-domain routeing information exchange protocol for use in conjunction with the protocol for providing the connectionless-mode network service," INTERNATIONAL STANDARD ISO/IEC 10589 (Second edition, November 15, 2002)(referred to as "ISO 10589" and incorporated herein by reference); and D. Oran (Ed.), "OSI IS-IS Intra-domain Routing Protocol," Request for Comments 1142 (Internet Engineering Task Force, February 1990)(referred to as "RFC 1142" and incorporated herein by reference). It was originally developed for use in Open Systems Interconnection("OSI")) networks, but was adapted to support Internet Protocol ("IP") routing. (See, e.g., R. Callon, "Use of OSI IS-IS for Routing in TCP/IP and Dual Environments," Request for Comments: 1195 (Internet Engineering Task Force, December 1990)(referred to as "RFC 1195" and incorporated herein by reference).) IS-IS is a link-state routing protocol, meaning routers exchange information about the state of their links with their neighbors. This allows each router to build a map of the network topology.

IS-IS includes four main steps (which may occur in parallel); namely, (1) neighbor discovery using IS-IS hello ("IIH") packets, (2) building a link state database using link state PDUs ("LSPs"), (3) calculating shortest paths to different destinations, and (4) flooding updates. More specifically, under IS-IS, routers send IIH packets to discover and maintain adjacencies (relationships) with neighboring routers. That is, these IIH packets are used to form adjacencies between routers. Once adjacencies are formed, routers exchange LSPs, which contain network topology information. More specifically, these LSPs include: (i) router ID; (ii) interface metrics; (iii) attached networks; and (iv) other reachable routers. All routers in an area store the received LSPs in their Link-State Database ("LSDB"). Each router may then independently calculate the shortest (e.g., lowest cost) path to all other nodes using the shortest path first ("SPF") algorithm. In each router, the result of these SPF calculations is the routing table or routing information base ("RIB"), which is used to build a forwarding information base ("FIB") used to forward packets. Finally, IS-IS uses reliable flooding to ensure all routers in the same area receive the same LSPs. Updates are only sent when there is a topology change (e.g., a router coming UP or going DOWN, a link coming UP or going DOWN, or changing its metric(s), etc.), reducing unnecessary traffic. Recently, IS-IS is often used to distribute information about resource reservation changes putting a much higher strain on the flooding procedures.

Sequence Number Packets ("SNPs") are a part of the IS-IS protocol. SNPs help ensure that all routers within the IS-IS area have a consistent view of the network topology by keeping their link-state databases synchronized. This is done by warranting that flooding is reliable even in presence of losses. There are two types of SNPs: Complete Sequence Number Packets ("CSNPs"); and Partial Sequence Number Packet ("PSNPs"). Each is introduced below.

CSNPs are sent periodically by designated intermediate systems ("DIS") on broadcast networks and, although not specified originally, on point-to-point links in today's deployments as well. CSNPs contain a list of all Link State PDUs ("LSPs") known to the router. The CSNP acts like a "directory listing" of the router's link-state database, and are used to synchronize the link-state database across routers. More specifically, the DIS on a LAN sends out CSNPs containing: (i) LSP IDs; (ii) sequence numbers; (iii) remaining lifetimes; and (iv) checksum values. Upon receipt of a CSNP, each neighboring router compares this information with their own LSP database, and if it detects a missing or outdated LSP, it requests updated information via a PSNP.

PSNPs are used to either acknowledge received LSPs, or to request missing LSPs from neighbors. They are commonly seen on point-to-point links or in response to CSNPs on broadcast links. As just noted above, when a router receives a CSNP and finds that it has a missing or outdated (stale) LSP, it sends a PSNP to request that LSP. Routers also use PSNPs to acknowledge receipt of LSPs, replacing the need for explicit LSP ACKs.

Although IS-IS is very widely used, it is becoming difficult to scale for very large link state databases with very large adjacency numbers. Therefore, it would be very useful for devices (e.g., routers) running IS-IS to support very large databases and adjacency numbers.

### § 3. SUMMARY

Particular aspects are set out in the appended independent claims. Various optional embodiments are set out in the dependent claims.

An example computer-implemented method for use in a system including a data forwarding device that runs a network discovery protocol (e.g., an IGP such as IS-IS) and maintains a link state database, includes: (a) generating, by the data forwarding device, a complete index of entries of the link state database (CIDBE) (e.g., CSNP); (b) compressing, by the data forwarding device, the CIDBE received to generate a compressed CIDBE (CCIDBE) (e.g., HSNP); and (c) transmitting, from the data forwarding device, the CCIDBE to a second data forwarding device, wherein the second data forwarding device is adjacent to the data forwarding device.

In some example implementations of the example computer-implemented method, the act of compressing the CIDBE received to generate a CCIDBE is performed hierarchically. In at least some such implementations, the act of compressing the CIDBE received to generate a CCIDBE includes (1) partitioning the CIDBE to generate CIDBE partitions (CIDBEPs), (2) compressing each of the CIDBEPs to generate compressed CIDBEPs (CCIDBEPs), and (3) compressing disjoint sets of CCIDBEPs (e.g., at one or more levels of a Merkle tree) to generate the CCIDBE.. In some example implementations of the example method, the CCIDBE is a Merkle tree root node. In some example implementations of the example method, the act of compressing the CIDBE received to generate a CCIDBE is performed recursively.

The example computer-implemented method may further include storing the CCIDBE in cache storage local to the data forwarding device.

A second data forwarding device may process the CCIDBE transmitted using an example computer-implemented method including: (a) receiving, by the second data forwarding device, the CCIDBE transmitted from the first data forwarding device; (b) responsive to receiving the CCIDBE, comparing the CCIDBE received with a corresponding CCIDBE derived from a link state database maintained by the second data forwarding device to determine whether or not the link state database maintained by the second data forwarding device is congruent with the link state database maintained by the data forwarding device; and (c) responsive to determining that the link state database maintained by the second data forwarding device is not congruent with the link state database maintained by the data forwarding device, performing one or more actions (e.g., exchanging further compressed data to isolate the incongruency and requesting the incongruent LSP via an PSNP) to synchronize the contents of link state database maintained by the data forwarding device and the link state database maintained by the second data forwarding device, and otherwise, responsive to determining that the link state database maintained by the second data forwarding device is congruent with the link state database maintained by the data forwarding device, not performing the one or more actions.

In at least some example implementation of the example method(s), the act of compressing the CIDBE received to generate a CCIDBE includes (1) partitioning the CIDBE to generate CIDBE partitions (CIDBEPs), (2) compressing each of the CIDBEPs to generate compressed CIDBEPs (CCIDBEPs), and (3) compressing disjoint sets of CCIDBEPs (e.g., at one or more levels of a Merkle tree) to generate the CCIDBE, and the act of performing one or more actions to synchronize the contents of link state database maintained by the data forwarding device and the link state database maintained by the second data forwarding device includes (1) requesting and receiving at least one of the CCIDBEPs to isolate the incongruency, and (2) requesting from the data forwarding device, or providing to the data forwarding device, (e.g., via PSNP(s)) one or more link state database entries causing the incongruency. In at least some such example implementations, the one or more link state database entries causing the incongruency is requested or provided via a partial sequence number protocol data unit ("PSNP"). In such example implementations, the act of partitioning the CIDBE is performed using ranges of system identifiers of link state protocol data units.

In at least some implementations of the example method(s), the network discovery protocol is Intermediate System-Intermediate System ("IS-IS"), and the CIDBE is at least one IS-IS complete sequence number protocol date unit ("CSNP").

An example system includes a first data forwarding device that runs a network discovery protocol (e.g., an IGP such as IS-IS) and maintains a link state database, the data forwarding device including (1) at least one processor, and (2) a computer-readable storage medium storing program instructions which, when executed by the at least one processor, cause the at least one processor to perform any of the example method(s) described (e.g., to transmit the CCIDBE). The example system may also include a second data forwarding device including (1) at least one processor, and (2) a computer-readable storage medium storing program instructions which, when executed by the at least one processor, cause the at least one processor of the second data forwarding device to perform any of the example method(s) described (e.g., to process a received CCIDBE).

### § 4. BRIEF DESCRIPTION OF THE DRAWINGS

Figure 1 illustrates an example communications network environment in which example methods consistent with the present description may operate.
Figure 2A is a flow diagram of an example method that may be performed by a first data forwarding device (A) as an originator, and Figure 2B is a flow diagram of an example method that may be performed by a second data forwarding device (B) as a receiver, for helping to synchronize their respective link state databases.
Figure 3 illustrates a Merkle tree, which may be used to compress an index of (e.g., link state) database entries.
Figure 4 illustrates a first of the three first order packets in a simplified, illustrative example, of an example method using hierarchical sequence number protocol date unit (HSNPs) instead of CSNPs.
Figure 5 illustrates a second order HSNP.
Figure 6A illustrates an example HSNP format.
Figure 6B illustrates a format of variable length fields, within an HSNP, that carry a sorted sequence of covered ranges.
Figure 7 illustrates two data forwarding devices coupled via communications links that may implement example methods and store example data structures consistent with the present description.
Figure 8 illustrates an example router that may perform example methods and store example data structures consistent with the present description.
Figure 9 is a block diagram of an example machine that may perform example methods and store example data structures consistent with the present description.

### § 5. DETAILED DESCRIPTION

The present disclosure may involve novel methods, apparatus, message formats, and/or data structures for confirming the coherency of large sets of distributed data (such as link state database entries stored on various data forwarding devices), discovering the source of any incoherency, and/or correcting any incoherency. This may be used to allow network discovery protocols such as IS-IS to scale for very large link state databases with very large adjacency numbers. The following description is presented to enable one skilled in the art to make and use the described embodiments, and is provided in the context of particular applications and their requirements. Thus, the following description of example embodiments provides illustration and description, but is not intended to be exhaustive or to limit the present disclosure to the precise form disclosed. Various modifications to the disclosed embodiments will be apparent to those skilled in the art, and the general principles set forth below may be applied to other embodiments and applications. For example, although a series of acts may be described with reference to a flow diagram, the order of acts may differ in other implementations when the performance of one act is not dependent on the completion of another act. Further, non-dependent acts may be performed in parallel. No element, act or instruction used in the description should be construed as critical or essential to the present description unless explicitly described as such. Also, as used herein, the article "a" is intended to include one or more items. Where only one item is intended, the term "one" or similar language is used. Thus, the present disclosure is not intended to be limited to the embodiments shown, but rather is set out in the appended claims.

### § 5.1 TERMINOLOGY AND ACRONYMS

"Adjacency" is the subset of the local routing information base pertinent to a single neighbor.

"CIDBE" is an acronym for Complete Index of (e.g., Link State) Database entries. One example of an CIDBE is CSNP in IS-IS. A CIDBE can be thought of as a digest of information in the database entries, or metadata about information in the database entries.

"CIDBEP" is an acronym for Complete Index of (e.g., Link State) Database Partition. Examples of CIDBEPs include leaf nodes of a Merkle tree in a context like the one described in § 5.4 below.

"CCIDBE" is an acronym for Compressed Complete Index of (e.g., Link State) Database entries. One example of a CCIDBE is the root node of a Merkle tree in a context like the one described in § 5.4 below. Note that a CCIDBE might be derived from (e.g., defined by) compressed CIDBEPs.

"CCIDBEP" is an acronym for Compressed Complete Index of (e.g., Link State) Database Partition(s). Examples of CCIDBEP include any non-leaf nodes of a Merkle tree (including the root node) in a context like that described in § 5.4 below.

"Data Forwarding Device" is a device that forwards data in a communications network. Examples of data forwarding devices include routers, switches, etc.

"IS-IS" is an acronym for the Intermediate System-to-Intermediate System interior gateway protocol.

"Link" is a communication path between two neighbors. A Link is "UP" when communication is possible between the two SNPAs.

"Neighbor" is an adjacent data forwarding device reachable by traversal of a single subnetwork by a PDU.

"Network Discovery Protocol" is a protocol run by a data forwarding device, typically in its control plane, for learning about a communications network (typically to which the data forwarding device belongs). Examples of network discovery protocols include interior gateway protocols ("IGPs") for learning about network information with an autonomous system ("AS") or area such as IS-IS and open shortest path first ("OSPF"), exterior gateway protocols (such as the border gateway protocol ("BGP"), MAC flooding, address resolution protocol ("ARP"), Link Layer Discovery Protocol ("LLDP"), Hot Standby Router Protocol ("HSRP"), Link Aggregation Control Protocol ("LACP"), ND, etc.

"Node" may refer to the node of a hierarchical data structure, or a network node such as a data forwarding device for example. The meaning of "node" will be apparent from the context in which it is used.

"PDU" is an acronym for protocol data unit.

"System ID" uniquely identifies a router in an IS-IS domain and consists traditionally of a sequence of six bytes.

### § 5.2 EXAMPLE OPERATING ENVIRONMENT

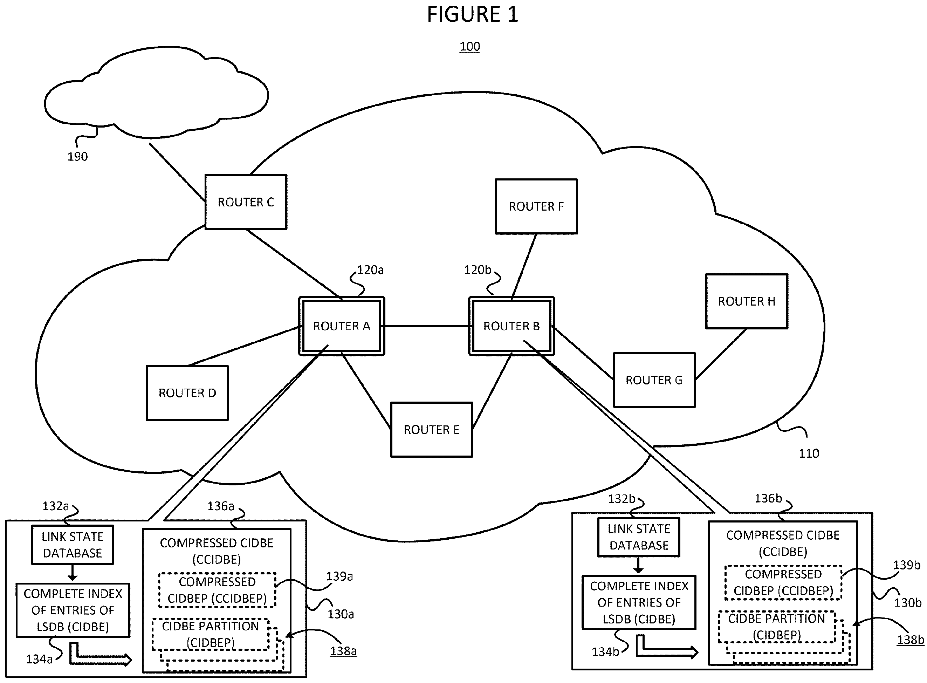

Figure 1 illustrates an example communications network environment 100 in which example methods consistent with the present description may operate, and is used to illustrate certain terms used in the present description. Router A 120a and router B 120b are "adjacent" to each other in that they share a communications link. Router A 120a is also adjacent to router C, router D and router E, and router B 120b is also adjacent to router E, router F and router G. Router G is adjacent to router H. These routers belong to a single autonomous system (AS) 110 and use an IGP such as IS-IS to learn about other routers and links within the AS 110. Router C can use an exterior gateway protocol such as BGP to learn about certain details in another AS 190.

Referring to just router A 120a and router B 120b, as a result of their performing the network discovery protocol, each builds its own link state database (LSBD) 132a/132b. This might be done per an existing IGP, such as IS-IS. Each also determines a complete index of the LSDB entries (CIDBE) 134a/134b. In the case of IS-IS, the CIDBE is shared using Complete Sequence Number Packets ("CSNPs"). Recall from § 2.2 above, IS-IS uses Sequence Number Packets ("SNPs") to help ensure that all routers within the IS-IS area have a consistent view of the network topology by keeping their link-state databases synchronized. This is done by warranting that flooding is reliable even in presence of losses. Recall, however, that although IS-IS is very widely used, it is becoming difficult to scale for very large link state databases with very large adjacency numbers. That is, it would be very useful for devices (e.g., routers) running IS-IS to support very large databases and adjacency numbers. Rather than (necessarily) exchanging CIDBEs, routers performing example methods consistent with the present description generate and exchange compressed CIDBEs (CCIDBEs) instead. (See CCIDBEs 136a/136b.)

Depending on the type of compression used, the CIDBE might be divided into partitions (CIDBEPs) 138a/138b. These partitions might be compressed to generate one or more compressed CIBDEPs (CCIDBEP)139a/139b. Depending on the type of compression used, this might be done in an iterative and/or hierarchical manner.

In this example, router A 120a and router B 120b might send and/or exchange at least the CCIDBE for purposes of checking whether or not their link state databases 132a/132b are synchronized (coherent). If not, the routers 120a/120b can perform corrective steps. This may involve sending and/or exchanging CCIDBEPs (perhaps progressing down from the root of a hierarchical/tree arrangement of CCIDBEPs), until the source of the incongruity is found and the router with the older information in its link state database can be updated. The router that sends such information might be referred to as an "originator" and the router that receives such information might be referred to as a "receiver." Note that a given router might act as an "originator" in some situations, and a "receiver" in other situations.

### § 5.3 EXAMPLE METHODS

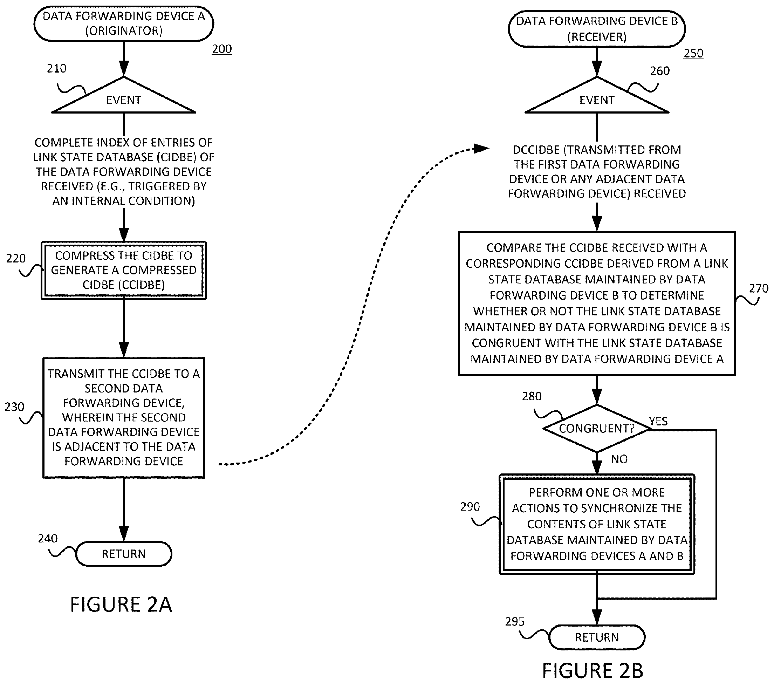

Figure 2A is a flow diagram of an example method 200 that may be performed by a first data forwarding device (A) as an originator, and Figure 2B is a flow diagram of an example method 250 that may be performed by a second data forwarding device (B) as a receiver. Each of the originating and receiving data forwarding devices runs a network discovery protocol (e.g., an IGP such as IS-IS) and maintains a link state database.

Referring first to Figure 2A, the main steps of the example method 200 are performed responsive to the receipt (e.g., from a module or process internal to the data forwarding device) of complete index of entries of the link state database (CIDBE) (e.g., CSNP). (Event 210) In response, the example method 200 compresses the CIDBE received to generate a compressed CIDBE (CCIDBE) (e.g., an HSNP described in the '495 provisional). (Block 220) The example method 200 then transmits the CCIDBE to a second data forwarding device (B) that is adjacent to the data forwarding device. (Block 230) The example method 200 is then left. (Return node 240) Referring next of Figure 2B, the main steps of the example method 250 are performed responsive to the receipt of the CCIDBE transmitted from the originating data forwarding device. (Event 260) In response to receiving the CCIDBE, the example method 250 compares the CCIDBE received with its own corresponding CCIDBE (derived from its own link state database) to determine whether or not its link state database is congruent with the link state database maintained by the originating data forwarding device. (Block 270) Responsive to determining that the its link state database is not congruent with the link state database of the originating data forwarding device (Decision 280 = NO), the example method 250 performs one or more actions (e.g., exchanging further compressed data to isolate the incongruency and requesting the incongruent LSP via an PSNP) in order to synchronize the contents its link state database and the link state database or the originating data forwarding device. (Block 290) Note that, in general, an older version or entry of a link state database will be updated to a newer version or entry. The example method 250 is then left. (Return node 295) Otherwise, responsive to determining that its link state database is congruent with the link state database of the originating data forwarding device (Decision 280 = YES), the example method 250 is simply left (Return node 295) (without performing the one or more actions of block 290).

Referring back to block 290, in an one example implementation that includes hierarchically compressed CSNP(s), the steps performed may include isolating the incongruency down to the CSNP level, and then sending a PSNP (thereby allowing legacy (e.g., IS-IS) mechanisms to take over and remedy any incongruent LSPs (and perhaps, to some extent, isolate the incongruent LSP(s).

Referring back to block 220 of Figure 2A, in some example implementations, the act of compressing the CIDBE received to generate a CCIDBE is performed hierarchically. For example, the act of compressing the CIDBE received to generate a CCIDBE may include (1) partitioning the CIDBE to generate CIDBE partitions (CIDBEPs), (2) compressing each of the CIDBEPs to generate compressed CIDBEPs (CCIDBEPs), and (3) compressing disjoint sets of CCIDBEPs (e.g., at one or more levels of a Merkle tree) to generate the CCIDBE. In such example implementation(s), referring to block 290 of Figure 2B, the act of performing one or more actions to synchronize the contents of link state database maintained by the originating data forwarding device and the link state database maintained by the receiving data forwarding device includes may include (1) requesting and receiving at least one of the CCIDBEPs to isolate the incongruency, and (2) requesting from the originating data forwarding device, or providing to the originating data forwarding device, (e.g., via PSNP(s)) one or more link state database entries causing the incongruency. Details of other example ways to compress the CIDBE to generate a compressed CIDBE are described in § 5.4 below.

In some example implementations, the CCIDBE is a Merkle tree root node. Still referring to block 220 of Figure 2A, in some example implementations, the act of compressing the CIDBE received to generate a CCIDBE is performed recursively.

Although not shown, the example method 200 may further include storing the CCIDBE in cache storage local to the data forwarding device.

### § 5.4 EXAMPLE COMPRESSION TECHNIQUES AND RESULTING DATA STRUCTURES

### § 5.4.1 RECURSIVE, HIERARCHICAL COMPRESSION AND RESULTING DATA STRUCTURE(S)

One example implementation consistent with the present description introduces an optional, new type of SNPs called Hierarchical SNP ("HSNP") that can compress the traditional CSNPs exchange into a variant of a Merkle tree (See, e.g., the document, Merkle, R.C., "A Digital Signature Based on a Conventional Encryption Function", Advances in Cryptology - CRYPTO '87, 1988 (incorporated herein by reference.) and skip lists (See, e.g., the document, Phan, C.-W., "Skip lists: A probabilistic alternative to balanced trees", Communications of the ACM, 1990 (incorporated herein by reference.), hence allowing IS-IS to support very large databases and adjacency numbers. Such an approach should lead to much faster re-synchronization in case of inconsistencies since only a subset of packets (compared to full scale CSNP exchange) is necessary to correct the entropy present. Additionally, in very large scale networks the resulting, much smaller amount of packets in stable state should lower the traffic and processing load of the control plane.

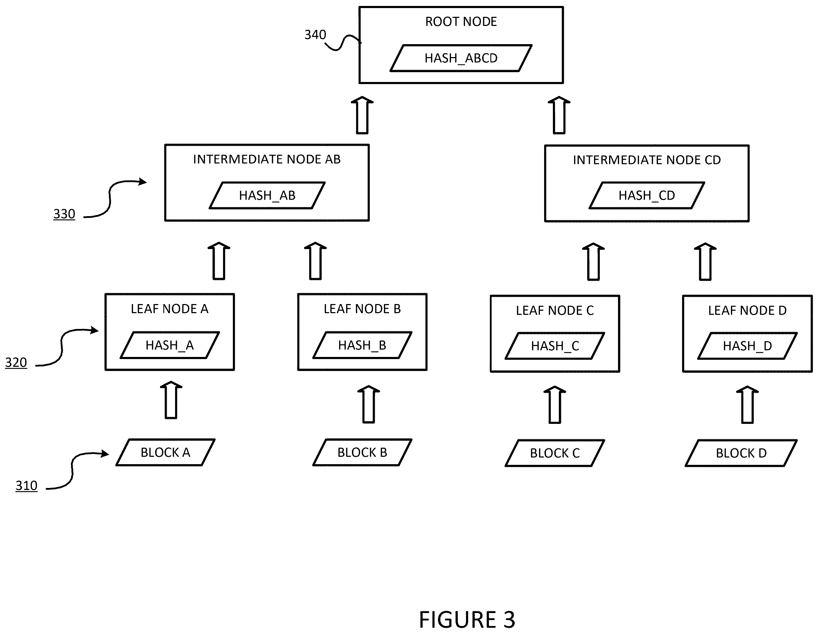

A Merkle tree (also known as a hash tree) is a binary tree data structure in which leaf nodes contain the cryptographic hashes of individual data blocks, and non-leaf (internal, and/or root) nodes contain the hashes of their child nodes, typically calculated by hashing the concatenation of the child hashes. Referring to Figure 3, consider, for example, four data blocks 310: A, B, C, D. These data blocks 310 might correspond to CIDBE partitions (CIDBEPs) 138a/138b in Figure 1. Four leaf nodes 320 would include a hash of each respective block; namely, (i) Hash_A = hash(A), (ii) Hash_B = hash(B), (iii) Hash_C = hash(C), and (iv) Hash_D = hash(D). These hashes 320 might correspond to a compressed CIDBEP (CCIDBEP) 139a/139b in Figure 1. In a three level Merkle tree, two intermediate nodes 330 could include hashes of the hashes in corresponding leaf nodes; namely, (i) Hash_AB = hash(Hash_A + Hash_B), and (ii) Hash_CD = hash(Hash_C + Hash_D). These further hashes 330 might also correspond to CCIDBEPs 139a/139b in Figure 1. The final Merkle root node 340 would include Hash_ABCD = hash(Hash_AB + Hash_CD). This might correspond to the compressed CIDBE (CCIDBE) 136a/136b in Figure 1.

Although this example compression scheme can be applied recursively to the point where a single Merkle hash represents the indices of the whole database (Recall, e.g., the CCIDBE 136a), for practical purposes a two level tree allows compression for link state database ("LSDB") sizes of the 1E5 (10⁵) order, and hence some example implementations described in the present description could limit themselves to such magnitudes. Further considerations mentioned in §§ 5.8 and 5.9 below seem to make this limit practically prudent.

The present description refers to CSNP entries of LSPs as the zero level Merkle hash (where LSP ID, Sequence Number and Checksum are basically used as a "hash") and the hash summarizing a set of those first level Merkle hash, and so on, recursively, to allow for unlimited levels, and hence scalability, of HSNPs. That is, CSNPs are the "zero level" (Recall partitioned blocks 310 of Figure 3.) and they already have their own checksums

Other techniques for compressing data and/or other data structures are possible. As one example, a skip list is a probabilistic data structure that allows fast search, insertion, and deletion operations, but implemented in a simpler and more intuitive way than balanced trees. A skip list consists of multiple levels of linked lists, in which the bottom level is a standard sorted singly linked list containing all elements, and each higher level acts as an "express lane" that skips over several elements, helping to speed up search operations. Each element can appear in one or more levels. The more levels an element is in, the faster it can be reached during search. In a skip list, each node contains a value and multiple forward pointers-one for each level it appears in. The number of levels in the list is determined probabilistically. Typically, each element has a 50% chance to appear in the next higher level. A special node at the top left (referred to as the "head node") begins the search path and spans all levels.

### § 5.4.1.1 REFINEMENTS TO IMPLEMENTATIONS USING RECURSIVE, HIERARCHICAL COMPRESSION AND RESULTING DATA STRUCTURE(S), SUCH AS MERKLE TREES

Various refinements to implementations using hierarchical, recursive compression are now described. In some instances, the refinements are directed to implementations used in the context of IS-IS and CSNPs.

### § 5.4.1.1.1 SUGGESTED DYNAMIC LEAF PARTITIONING

One interesting implementation detail is the intelligent subdivision (partitioning) of the link state database into a first level collection of leaf nodes (CSNP entries) (Recall, e.g., 310 of Figure 3.) that, on one hand, can provide a good compression, while, on the other hand, causes the subdivision (partitions) to change as little as possible or only when necessary. Otherwise, the device (e.g., an adjacent data forwarding device) receiving the information may have to recompute the hashes rather than relying on a cache storing contends of its own Merkle tree. The subdivision (partitioning) should also produce enough "bins" regardless of the distribution of the LSP fragments (where each LSP fragment can be identified by an LSP ID that includes a 6-byte system ID + a 1-byte pseudonode ID + a 1-byte fragment ID) in the network. This is important to prevent such things as packing of all the LSPs fragments of the LSDB into a single checksum when, for example, a hash function degenerates. And ideally, a hash mismatch should produce not more than a single packet or two with lower level checksums or CSNPs to optimize re-convergence while minimizing amount of packets exchanged.

To start with, in IS-IS networks, somewhat less than 100 of zero level entries can be fit into the prevailing 1500 bytes (which corresponds to the maximum transmission unit ("MTU"), which is the largest size in bytes of a PDU that can be transmitted on an interface without requiring fragmentation) for the foreseeable future. This is the consequence of CSNP entries consuming a length corresponding to LSP ID + Sequence Number + Checksum + Lifetime, which amounts to 8 + 2 + 2 + 2 = 14 bytes each. Subsequently, first and higher level hashes will occupy (as shown below) the length of 7 + 7 + 4 = 18 bytes per hash. Hence, around 80 of these hashes fit into a PDU. The suggested partitioning and packing scheme below considers these factors. To start with, as stated, it is desirable to produce one packet on a miss on the Merkle hash of first level leaf and hence such leaves will pack initially 80 LSP fragments with exceptions following later. It might be undesirable to maximize the "initial packing" because the LSDB may grow and it is desirable to maximize the chances of same "leaf packing" on both sides of an adjacency, even during flooding transitions. Therefore, some "slack" in the packing (of LSP fragments into leaf partitions) is advisable. At higher levels, to begin with 60 hashes should be summarized by a higher level hash for the same reason.

The packing puts all LSP fragments of a system into same leaf (which can exceed the advisable 80 LSP fragments sometimes) and a first order leaf will be considered "full" if the addition of next System ID fragments would exceed this size (except when the leaf is empty).

### § 5.4.1.1.1.1 REPACKING

During transitions due to the flooding of new link state information, the databases on different nodes (e.g., routers) may be different for some period of time. As stated, even in such situations it is beneficial for efficient implementations using caching to have the data forwarding devices on both sides an adjacency to agree on the ranges (which define the partitions) of the Merkle hashes advertised. Alternately, if both data forwarding devices can't or won't agree on the ranges, it is desirable to have a fast way to reconstruct the internal Merkle hash for a range. As one example, in the suggested packing scheme described above, since the nodes will agree on the "system-ID" boundary, a Merkle hash per system ID (of the LSP ID of the LSP fragment) can be easily kept, and if the received ranges do not agree with cached local ranges, the necessary Merkle hash can be recomputed very quickly. For example, in first level of the Merkle tree, in the worst case of two leaves containing ~80 nodes each and "intersecting" the cached internal ranges, an example implementation will have to Merkle hash about 160 hashes (one per System ID) to validate the received value.

It is still highly preferred for the partition ranges on advertised Merkle hashes to agree on their system ID ranges precisely. This is most important at the top level because, under stable conditions, those are the Merkle hashes exchanged. Prior agreement between the originating and receiving data forwarding devices on the partition ranges basically reduces (e.g., minimizes) the CSNP exchange of packets and processing.

To settle on the same ranges in HSNPs, an implementation of the suggested packing should let a leaf that drops under a predetermined (e.g., 50%) occupancy "start robbing" system IDs from "left" of the next leaf until the current leaf meets the "full condition". This is a recursive action that may ultimately generate less leaves, remove some leaves and, in a recursive fashion, lead to the same "greedy robbery from the left" in the next level up in the Merkle tree. (The "left" is colloquial here for starting with lowest System IDs under normal sorting criteria.) On the other end of the spectrum, a leaf that holds more than a predetermined percentage (e.g., 150%) of usual capacity (i.e., 80 * 1.5 LSPs, or 60 * 1.5 Hashes, in this example) should be preferably split into two leaves unless it holds a single System ID with more than 80 fragments. Splitting the leaves may cause a repacking at a higher level again in a recursive fashion.

The rebalancing of partition ranges to agree across all nodes of the tree and hence reduce hashing load is a trade-off in terms of possibly large recomputation versus suffering a penalty of recomputing some hashes on disagreeing ranges on every exchange. Other solutions such as internal caches that keep the recomputed hashes for the neighbor's (adjacent router's) partition ranges for example, are possible.

Precise splitting/merging algorithms should be agreed upon in order to increase the likelihood of nodes ending up partitioning on precisely same ranges. An alternative is to simply "repack" the whole tree responsive to some balance violations, or periodically. Another alternative is to simply use IS-IS LSP fragment sliding. However, this alternative may lead in worst case to first level check summing a single fragment over time.

Overall, different partitioning and packing approaches are possible. However, if system ID (of the LSP ID of the LSP fragment) as natural partition is not used, this will likely change the packet format since the partition boundaries will necessarily reflect which of the LSP fragments are covered by the hashes. Given that ordering of LSP fragments has to be preserved, the start and end of partition ranges should consist of system IDs of the LSP IDs of the LSP fragments, although alternatives might be possible.

### § 5.4.1.1.2 FAST, INCREMENTAL, SELF-INVERSE HASHING FUNCTION

Since generating massive amount of hashes over sets of ever-changing LSP fragments will be likely, it is very desirable to use a specialized hash function that provides means for very fast incremental adjustment of hash result on LSP fragments arriving, aging out, or changing their checksums. Also, splitting or merging of leaves will cause the rehashing of such leaves, as well as higher level nodes in the tree, so the quick generation of first and higher order hashes is very useful.

Deeper considerations on such hashes can be found in the document, Phan, C.-W., "Security considerations for incremental hash functions based on pair block chaining", Computers and Security 25, 2006 (incorporated herein by reference) but the design space in the context of IS-IS is simplified (e.g., due to the irrelevance of security).

A large prime number constant may be used to prime all hashes and increase entropy.

A practical hash function under the circumstances is a very fast XOR operation which incorporates the system IDs, checksums and numbering of LSP fragments. It may be 64 bits long for simplicity. Note that in the following, in the following, the symbol "<<" is used to denote rotation (not shift) to the left.

A hash of a first order leaf (where all used values are converted to 64-bit values first with any remaining high order bits zeroed out) the usual XOR (hash, (system-id-of-LSP fragment + 1) << fragment#) followed by XOR (hash, (fragment# + 1) << 32 | (fragment- seq# + 1) << 16 | (fragment-csum + 1)) is used for all contained fragments. Such an operation can be easily reversed to yield the previous hash with the fragment removed. This permits very fast removal of fragment(s), addition of fragment(s) and updates of the relevant fields to account for range mismatch in HSNPs. Thus, first order of the Merkle tree hashes LSP information in the prescribed fashion. Every higher order of the Merkle tree simply XORs the lower order hashes.

The example below uses the following code:

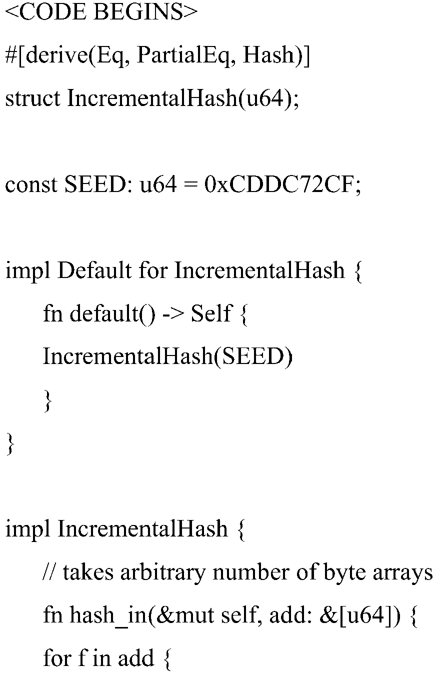

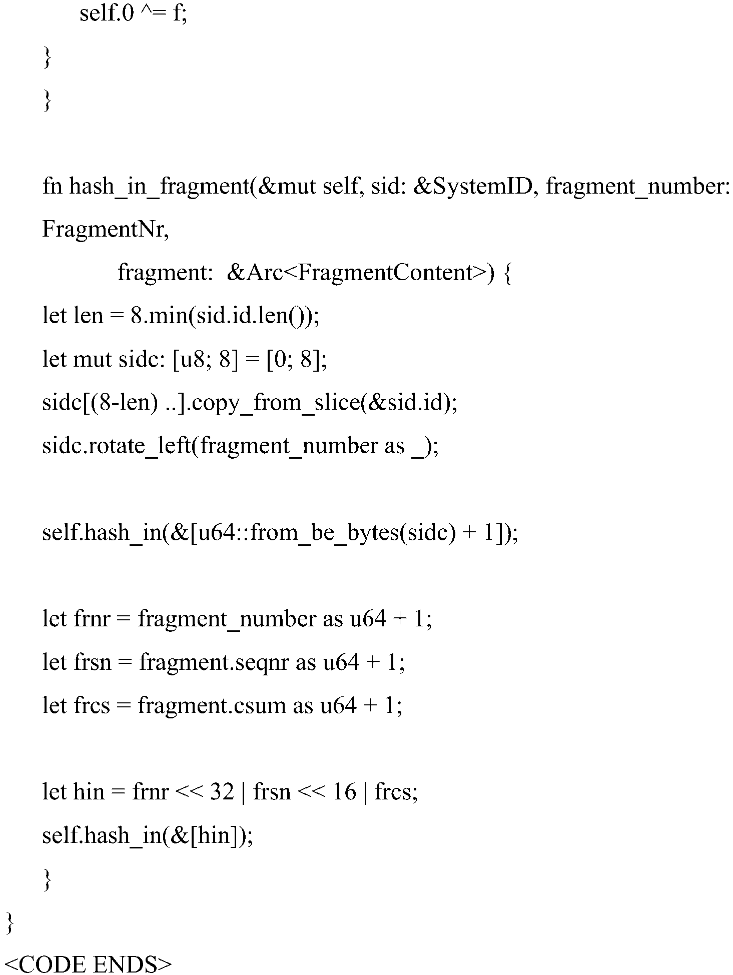

An example of adding multiple fragments and removing those (in different order) which yields, ultimately, the same initial hash is found below:
Initial Hash: CDDC72CF
Adding Fragment 0100.0000.0000.00 #: 0 CSUM: 1 SEQ#: 0
Hash after Addition 10001CDDD72CC
Adding Fragment 0100.0000.0000.00 #: 1 CSUM: 2 SEQ#: 1
Hash after Addition 1010003CDDF72CE
Adding Fragment 0200.0000.0000.00 #: 1 CSUM: 3 SEQ#: 2
Hash after Addition 3010001CDDC72CB
Removing Fragment 0100.0000.0000.00 #: 0 CSUM: 1 SEQ#: 0
Hash after Removal 3000000CDDD72C8
Removing Fragment 0100.0000.0000.00 #: 1 CSUM: 2 SEQ#: 1
Hash after Removal 2000002CDDF72CA
Removing Fragment 0200.0000.0000.00 #: 1 CSUM: 3 SEQ#: 2
Hash after Removal CDDC72CF

A hash of a second order node is XOR of all the hashes of all the contained first order leaves. Again, such a design allows the hash to be updated when adding a leaf, removing a leaf, or changing its checksum in a very fast and simple manner. The packing of second order nodes is determined by how many first order hashes can be fitted into a MTU normally. As described below, a second order leaf size can be set to 70. This will cause a mismatch in the hash of a second order leaf to advertise roughly a protocol data unit (PDU) full of first order leaves.

Ultimately, a third order hash uses second order hash logic to keep its hash. This all means that every time a first order leaf changes the partitioned range of system IDs for some reason, the Merkle hashes will be readjusted recursively in according/corresponding second and third order nodes. This is, in itself, nothing particular since any change on first order leaf hash forces change on an associated second order (and consequently third order) leaf hash. This is how Merkle trees work.

A first example is provided here. Thess examples are limited to consideration of a LSDB with 512 nodes with system identifiers of 1000.0000.00 <two-digit node-id>, each holding 32 fragments numbered 0 to 31. Uneven node identifiers are left out in order to have some "holes" in the numbering (to hit some corner cases in further examples). In these examples, the pseudo node byte is ignored as another byte of system identifier since it does not contribute further details to the scheme (and the value 0 is used below).

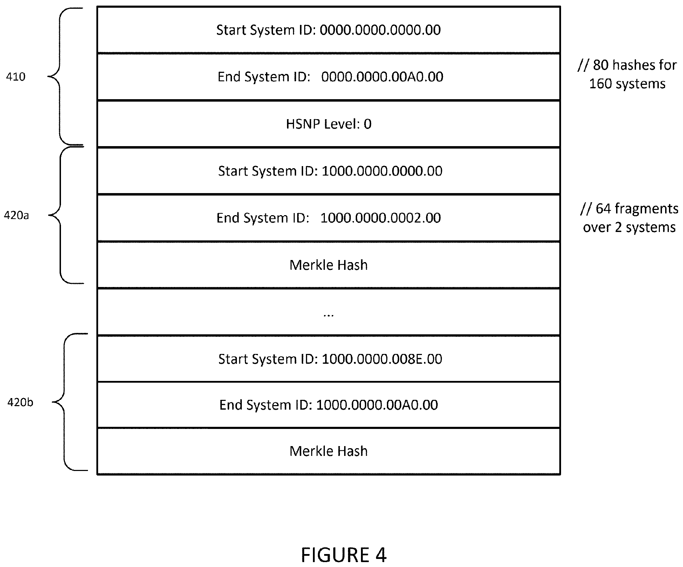

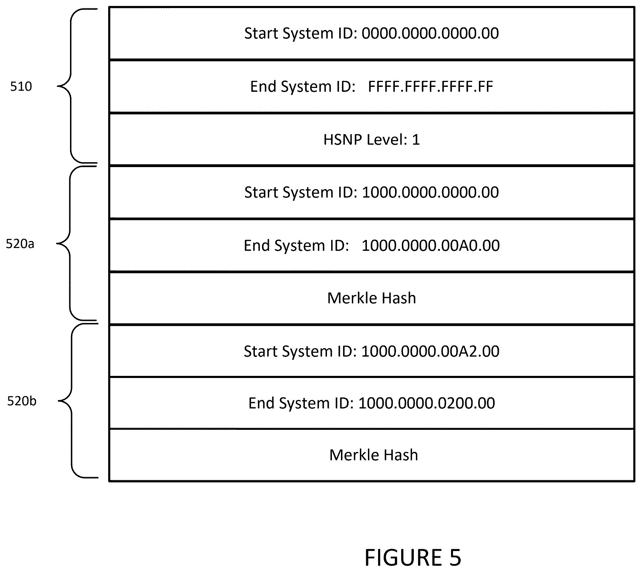

In a stable state, the following 128 first order leaves (each holding two systems worth of fragments) can be expected to generate three packets (e.g., HSNPs of the according order). And as a logical consequence, two single second order nodes can be expected. A first of the three first order packets (e.g., HSNPs of the according order) in a simplified example is illustrated in Figure 4. More specifically, in Figure 4, part 410 illustrates start and end system IDs (of LSP IDs of the LSP fragments) for HSNP level 0, and parts 420a...420b illustrate partition ranges (in terms of start and end system IDs) and their corresponding hashes. Notice that the start system ID for the level 410 corresponds to the start system ID of the first partition 420a, and that the end system ID for the level 410 corresponds to the end system ID of the last partition 420b. The second order packet (e.g., HSNP) is illustrated in Figure 5. More specifically, in Figure 5, part 510 illustrates start and end system IDs (of LSP IDs of the LSP fragments) for HSNP level 1, and parts 520a...520b illustrate partition ranges (in terms of start and end system IDs) and their corresponding hashes.

### § 5.4.1.1.3 HSNP PDU FORMAT

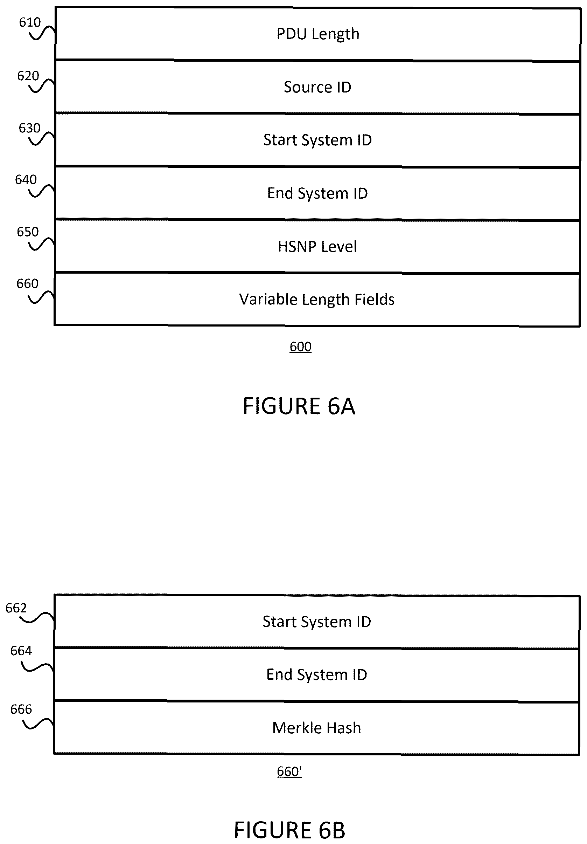

As illustrated in Figure 6A, an example HSNP PDU format 600 follows closely the CSNP format. However, instead of CSNP entries, the according Merkle hashes are propagated. As shown, the example HSNP PDU format 600 includes PDU length 610, source ID (of the router originating the HSNP PDU) 620, start system ID 630, end system ID 640, HSNP level 650 (Recall, e.g., the levels of the Merkle tree in Figure 3.), and variable length fields 660.

Start and End System IDs 630 and 640 are the usual ID Length + 1 byte length and indicate, just like CSNP do, the range that the HSNP covers. The HSNP level 650 consists of 1 byte of level with 0 indicating "first level hashes". The variable length fields 660 are a sorted sequence of covered ranges in the format illustrated by Figure 6B. As shown in Figure 6B, each of the variable length fields 660' includes a start system ID 662, an end system ID 664, and a Merkle hash 666. End System ID LSPs are included in the hash. The Merkle hash 666 consists of 4 bytes of the 64-bit computed hash, with upper and lower 4 bytes XOR'ed together. This makes an entry in typical deployment scenarios 7 + 7 + 4 = 18 bytes long.

### § 5.4.1.1.4 HANDLING DATABASE INCONGRUENCIES IN EXAMPLE EMBODIMENT USING MERKLE TREES

In at least some example implementations consistent with the present description, advertising normal CSNPs is replaced with advertisement of HSNPs at highest negotiated level. Under a normal stable network condition, this will be enough to maintain database integrity across all nodes with a minimum of transmission and processing.

In the event that a node receives HSNPs where the Merkle hash ranges are not the same, the node (e.g., must) either (A) compute and verify the hashes over the ranges indicated, or (B) disaggregate the overlapped ranges to a lower level HSNPs. Disaggregation is less preferred since, in case of range mismatches over all levels and both sides, using this strategy can lead to a "descending level ping-pong" ending with CSNPs ultimately.

A node receiving an HSNP where the hash received does not match, on recomputation or comparison, the result on its own LSDB should send immediately HSNPs of one level below with the Merkle hashes for the ranges where the hash mismatch was detected. Alternately, a node may choose to immediately send according CSNPs, PSNPs or flood the LSPs that have been detected as not matching the Merkle hashes. Sending CSNPs may be preferable if the mismatch covers relatively few LSPs.

In case a node detects that it holds Merkle hashes for LSPs that are not covered by the received HSNP (start and end range and "holes" between ranges can be used to detect that condition), it (e.g., must) trigger the same behavior as triggered by CSNP with this condition (i.e., it (e.g., must) flood the missing LSPs).

### § 5.4.2 OTHER EXAMPLE COMPRESSION TECHNIQUES AND RESULTING DATA STRUCTURES

Although the complete index of database entries was described as being compressed into a Merkle tree data structure, compression into other data structures is possible.

### § 5.4.3 EXAMPLE HYBRID IMPLEMENTATION

As should be appreciated from the foregoing, example implementations consistent with the present description should be useful in the context of IS-IS deployments to help when scaling to very large link state databases with very large adjacency numbers. In an hybrid implementation, normal IS-IS mechanisms (e.g., uncompressed CSNPs) are used when the size of the link state database and/or the number of adjacencies is below a threshold(s), but the methods 200 and 250 are used when the size of the link state database and/or number of adjacencies reaches or exceeds the threshold(s). This hybrid approach may be used in the context of other databases as well.

### § 5.5 EXTENSION TO DATA COHERENCY CHECKS AND/OR CORRECTIONS IN OTHER LARGE SCALE DISTRIBUTED DATABASES

Although example implementations were discussed in the context of distributed link state database information, example implementations consistent with the present description can be extended to other applications such as for security consensus building (e.g., Paxos protocols, etc.) for example.

### § 5.6 ADVERTISEMENT/NEGOTIATION OF COMPRESSION PROCEDURE AND/OR PARAMETER(S)

In some example implementations, the originating and receiving nodes can be configured to perform a standardized compression procedure (with standardized parameter(s)) on a complete index of (e.g., link state) database entries. For example, the use of preset partition ranges and a preset hash function will avoid recompression (e.g., recomputation of hash values) in many situations, and locally cached values will not change as often.

In other example implementations, the compression procedure (and/or parameter(s)) may be dictated by a central server or an elected or designated node. Similarly, the use of common partition ranges and a common hash function will avoid recompression (e.g., recomputation of hash values) in many situations, and locally cached values will not change as often.

Other ways of advertising and/or negotiating a compression procedure and/or parameters, especially in the context of network discovery protocols such as IS-IS, are described in §§ 5.6.1 and 5.6.2 below.

### § 5.6.1 ADVERTISEMENT/NEGOTIATION OF COMPRESSION PROCEDURE AND/OR PARAMETER(S) VIA IIHs

As is known, IS-IS Hello ("IIH") packets are used to establish and maintain neighbor relationships between routers (referred to as Intermediate Systems). IIH packets may be used for neighbor discovery. That is, they may be used to detect and identify adjacent routers on a link. IIH packets may also be used for adjacency establishment. That is, they may be used to facilitate the process of forming and maintaining adjacencies, which are logical connections between IS-IS routers that allow for the exchange of routing information. IIH packets may be used to carry information about the type of network (broadcast versus point-to-point) and help determine if the router should participate in designated intermediate system ("DIS") elections on broadcast networks. Finally, IIH packets may include authentication information to ensure that only trusted routers can participate in the IS-IS routing domain. Although IIH packets are not themselves Link State PDUs ("LSPs"), they are part of the link-state advertisement process, because no LSPs are exchanged until an adjacency is formed using IIH packets. That is, IIH packets ensure routers have a stable, mutual understanding of their neighbors before syncing full topology data.

IIH of nodes supporting the extension to IS-IS proposed in the present description include (e.g., must include) in IIH a new type-length-value ("TLV") that will indicate support for reception of HSNPs. Additionally, the TLV carries the maximum level of HSNPs that the node will advertise. Each node picks (e.g., must pick) the minimum of advertised levels on the adjacency and use that for the HSNPs it will advertise. All nodes on the adjacency advertise (e.g., must advertise) the TLV on their IIHs, otherwise HSNPs are not used. Other parameters used, such as for example, partition type, partition ranges, compression algorithm used, compression algorithm parameters, etc., may also be included as TLV(s) or sub-TLV(s) in IIH packets. Note that IIH allows data forwarding devices to negotiate/signal per interface.

### § 5.6.2 ADVERTISEMENT/NEGOTIATION OF COMPRESSION PROCEDURE AND/OR PARAMETER(S) VIA ROUTER CAPABILITIES

Instead of, or in addition to, the use of IIH packets to advertise/negotiate compression procedure(s) and/or parameter(s), extensions to various protocols for advertising capabilities may be used to signal some or all of such parameters. For example, in the context of IS-IS, procedures described in the document, L. Ginsberg, et al, "IS-IS Extensions for Advertising Router Information," Request for Comments 7981 (Internet Engineering Task Force (IETF), October 2016)(referred to as "RFC 7981" and incorporated herein by reference) may be used to advertise/negotiate compression procedure(s) and/or parameter(s) to be used. Note that capabilities advertised are typically for the entire router, not per interface of the router.

### § 5.7 IMPACT OF PACKET LOSSES

Example implementations that use many levels of aggregation will be more susceptible to packet losses since each loss covers a much larger part of the LSDB. Additionally, in example implementations using Merkle trees (and perhaps other hierarchical compression procedures and data structures), during disaggregation, where multiple HSNP levels must be triggered, the loss will force a delay until the higher level HSNP is regenerated.

### § 5.8 DECOMPRESSION AND CACHING/COMPARISON OPTIMIZATIONS

As mentioned above, in example implementations using Merkle trees (and perhaps other hierarchical compression procedures and data structures), a node may apply many strategies to speed up decompression. LSPs missing in HSNPs as not covered by ranges are clearly "missing in action" and can be reflooded, and small ranges where Merkle hashes are mismatched can generate CSNPs, PSNPs or lead to flooding.

Caching of hashes can be applied at many levels since the Merkle hashes suggested here are easily computed, even if certain elements must be removed from them, so, for example, on receiving a range <A -- B> while the node already holds < A -- B & next-after-B> can be simply adjusted by removing 'next-after-B' Merkle hash defined in the present description from the cached result.

### § 5.9 EXAMPLE APPARATUS

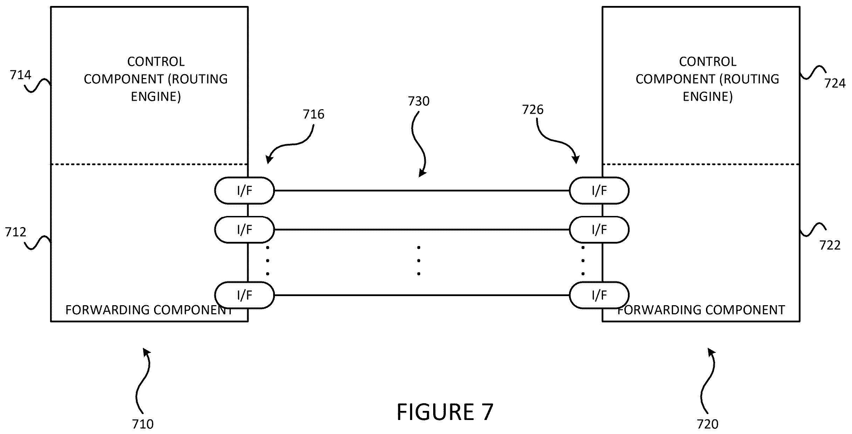

The example methods and data structures described above, and variants thereof, can be implemented on nodes (e.g., routers) of a communications network. Figure 7 illustrates two adjacent data forwarding devices 710 and 720 coupled via communications links 730. The links may be physical links or "wireless" links. The data forwarding devices 710,720 may be routers for example. If the data forwarding devices 710,720 are example routers, each may include a control component (e.g., a routing engine) 714,724 and a forwarding component 712,722. Each data forwarding device 710,720 includes one or more interfaces 716,726 that terminate one or more communications links 730.

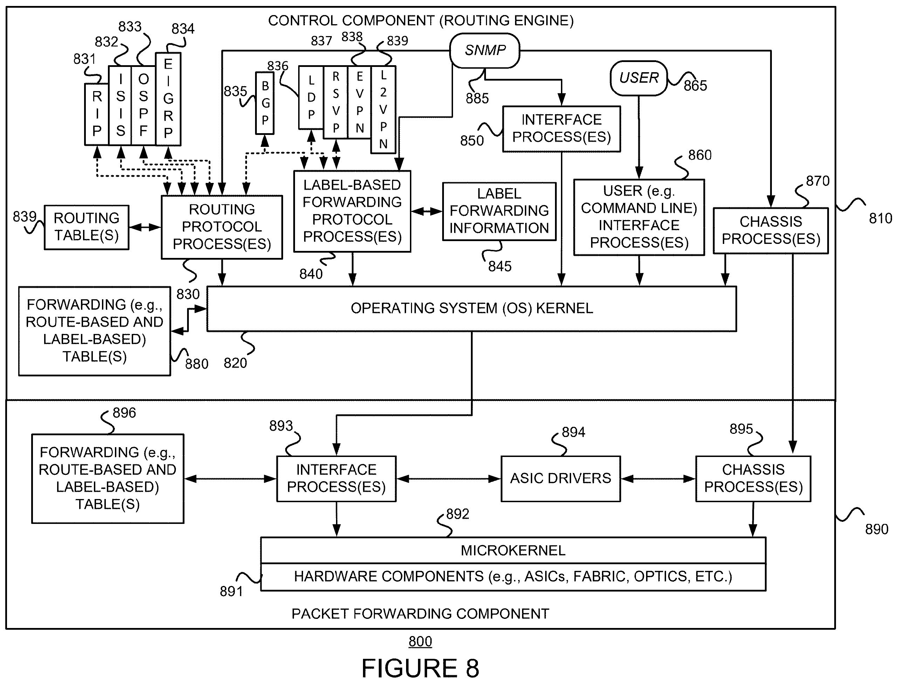

Figure 8 illustrates an example router. As discussed above, some example routers 800 include a control component (e.g., routing engine) 810 and a packet forwarding component (e.g., a packet forwarding engine) 890.

The control component 810 may include an operating system (OS) kernel 820, routing protocol process(es) 830, label-based forwarding protocol process(es) 840, interface process(es) 850, user interface (e.g., command line interface (CLI)) process(es) 860, and chassis process(es) 870, and may store routing table(s) 839, label forwarding information 845, and forwarding (e.g., route based and/or label based) table(s) 880. As shown, the routing protocol process(es) 830 may support routing protocols such as the routing information protocol ("RIP") 831, the intermediate system to intermediate system protocol ("IS-IS") 832, the open shortest path first protocol ("OSPF") 833, the enhanced interior gateway routing protocol ("EIGRP") 834 and the border gateway protocol ("BGP") 835, and the label-based forwarding protocol process(es) 840 may support protocols such as BGP 835, the label distribution protocol ("LDP") 836, the resource reservation protocol ("RSVP") 837, EVPN 838 and L2VPN 839, segment routing (SR) (not shown), multi-protocol label switching (MPLS) (not shown), etc. The present description may be applied as an extension to, or modification of, the IS-IS process 832 or some other routing protocol that creates distributed databases of network information. One or more components (not shown) may permit a user 865 to interact with the user interface process(es) 860. Similarly, one or more components (not shown) may permit an outside device to interact with one or more of the router protocol process(es) 830, the label-based forwarding protocol process(es) 840, the interface process(es) 850, and/or the chassis process(es) 870, via SNMP 885, and such processes may send information to an outside device via SNMP 885.

The packet forwarding component 890 may include a microkernel 892 over hardware components (e.g., ASICs, switch fabric, optics, etc.) 891, interface process(es) 893, ASIC drivers 894, chassis process(es) 895 and forwarding (e.g., route based and/or label-based) table(s) 896.

In the example router 800 of Figure 8, the control component 810 handles tasks such as performing routing protocols, performing label-based forwarding protocols, control packet processing, etc., which frees the packet forwarding component 890 to forward received packets quickly. That is, received control packets (e.g., routing protocol packets and/or label-based forwarding protocol packets) are not fully processed on the packet forwarding component 890 itself, but are passed to the control component 810, thereby reducing the amount of work that the packet forwarding component 890 has to do and freeing it to process packets to be forwarded efficiently. Thus, the control component 810 is primarily responsible for running routing protocols and/or label-based forwarding protocols, maintaining the routing tables and/or label forwarding information, sending forwarding table updates to the packet forwarding component 890, and performing system management. The example control component 810 may handle routing protocol packets, provide a management interface, provide configuration management, perform accounting, and provide alarms. The processes 830, 840, 850, 860 and 870 may be modular, and may interact with the OS kernel 820. That is, nearly all of the control processes communicate directly with the OS kernel 820. Using modular software that cleanly separates processes from each other isolates problems of a given process so that such problems do not impact other processes that may be running. Additionally, using modular software facilitates easier scaling.

Still referring to Figure 8, the example OS kernel 820 may incorporate an application programming interface ("API") system for external program calls and scripting capabilities. The control component 810 may be based on an Intel PCI platform running the OS from flash memory, with an alternate copy stored on the router's hard disk. The OS kernel 820 is layered on the Intel PCI platform and establishes communication between the Intel PCI platform and processes of the control component 810. The OS kernel 820 also ensures that the forwarding tables 896 in use by the packet forwarding component 890 are in sync with those 880 in the control component 810. Thus, in addition to providing the underlying infrastructure to control component 810 software processes, the OS kernel 820 also provides a link between the control component 810 and the packet forwarding component 890.

Referring to the routing protocol process(es) 830 of Figure 8, this process(es) 830 provides routing and routing control functions within the platform. In this example, the RIP 831, ISIS 832, OSPF 833 and EIGRP 834 (and BGP 835) protocols are provided. Naturally, other routing protocols may be provided in addition, or alternatively. Similarly, the label-based forwarding protocol process(es) 840 provides label forwarding and label control functions. In this example, the LDP 836, RSVP 837, EVPN 838 and L2VPN 839 (and BGP 835) protocols are provided. Naturally, other label-based forwarding protocols (e.g., MPLS, SR, etc.) may be provided in addition, or alternatively. In the example router 800, the routing table(s) 839 is produced by the routing protocol process(es) 830, while the label forwarding information 845 is produced by the label-based forwarding protocol process(es) 840.

Still referring to Figure 8, the interface process(es) 850 performs configuration of the physical interfaces and encapsulation.

The example control component 810 may provide several ways to manage the router. For example, it 810 may provide a user interface process(es) 860 which allows a system operator 865 to interact with the system through configuration, modifications, and monitoring. The SNMP 885 allows SNMP-capable systems to communicate with the router platform. This also allows the platform to provide necessary SNMP information to external agents. For example, the SNMP 885 may permit management of the system from a network management station running software, such as Hewlett-Packard's Network Node Manager ("HP-NNM"), through a framework, such as Hewlett-Packard's OpenView. Accounting of packets (generally referred to as traffic statistics) may be performed by the control component 810, thereby avoiding slowing traffic forwarding by the packet forwarding component 890.

Although not shown, the example router 800 may provide for out-of-band management, RS-232 DB9 ports for serial console and remote management access, and tertiary storage using a removable PC card. Further, although not shown, a craft interface positioned on the front of the chassis provides an external view into the internal workings of the router. It can be used as a troubleshooting tool, a monitoring tool, or both. The craft interface may include LED indicators, alarm indicators, control component ports, and/or a display screen. Finally, the craft interface may provide interaction with a command line interface ("CLI") 860 via a console port, an auxiliary port, and/or a management Ethernet port.

The packet forwarding component 890 is responsible for properly outputting received packets as quickly as possible. If there is no entry in the forwarding table for a given destination or a given label and the packet forwarding component 890 cannot perform forwarding by itself, it 890 may send the packets bound for that unknown destination off to the control component 810 for processing. The example packet forwarding component 890 is designed to perform Layer 2 and Layer 3 switching, route lookups, and rapid packet forwarding.

As shown in Figure 8, the example packet forwarding component 890 has an embedded microkernel 892 over hardware components 891, interface process(es) 893, ASIC drivers 894, and chassis process(es) 895, and stores a forwarding (e.g., route-based and/or label based) table(s) 896. The microkernel 892 interacts with the interface process(es) 893 and the chassis process(es) 895 to monitor and control these functions. The interface process(es) 892 has direct communication with the OS kernel 820 of the control component 810. This communication includes forwarding exception packets and control packets to the control component 810, receiving packets to be forwarded, receiving forwarding table updates, providing information about the health of the packet forwarding component 890 to the control component 810, and permitting configuration of the interfaces from the user interface (e.g., CLI) process(es) 860 of the control component 810. The stored forwarding table(s) 896 is static until a new one is received from the control component 810. The interface process(es) 893 uses the forwarding table(s) 896 to look up next-hop information. The interface process(es) 893 also has direct communication with the distributed ASICs. Finally, the chassis process(es) 895 may communicate directly with the microkernel 892 and with the ASIC drivers 894.

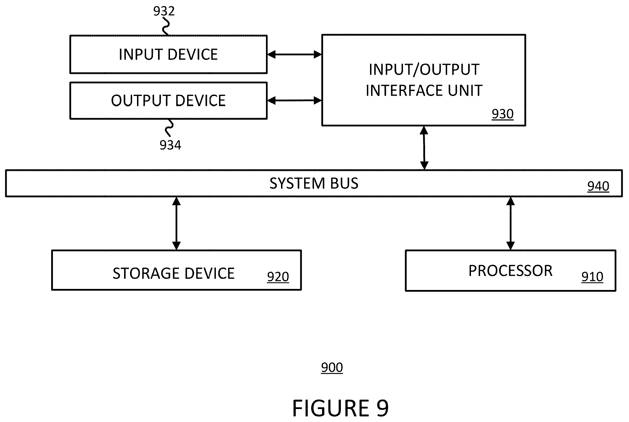

Although example embodiments consistent with the present description may be implemented on the example routers of Figures 7 and 8, embodiments consistent with the present description may be implemented on communications network nodes (e.g., data forwarding devices such as routers, switches, etc.) having different architectures. More generally, embodiments consistent with the present description may be implemented on an example system 900 as illustrated on Figure 9.

Figure 9 is a block diagram of an example machine 900 that may perform one or more of the processes described, and/or store information used and/or generated by such processes. The example machine 900 includes one or more processors 910, one or more input/output interface units 930, one or more storage devices 920, and one or more system buses and/or networks 940 for facilitating the communication of information among the coupled elements. One or more input devices 932 and one or more output devices 934 may be coupled with the one or more input/output interfaces 930. The one or more processors 910 may execute machine executable instructions (e.g., C or C++ running on the Linux operating system widely available from a number of vendors) to perform one or more aspects of the present description. At least a portion of the machine executable instructions may be stored (temporarily or more permanently) on the one or more storage devices 920 and/or may be received from an external source via one or more input interface units 930. The machine executable instructions may be stored as various software modules, each module performing one or more operations. Functional software modules are examples of components of the present description.

In some embodiments consistent with the present description, the processors 910 may be one or more microprocessors and/or ASICs. The bus 940 may include a system bus and/or data links. The storage devices 920 may include system memory, such as read only memory ("ROM") and/or random access memory ("RAM"). The storage devices 920 may also include a hard disk drive for reading from and writing to a hard disk, a magnetic disk drive for reading from or writing to a (e.g., removable) magnetic disk, an optical disk drive for reading from or writing to a removable (magneto-) optical disk such as a compact disk or other (magneto-) optical media, or solid-state non-volatile storage.

Some example embodiments consistent with the present description may also be provided as a machine-readable medium comprising (e.g. storing and/or conveying) the machine-executable instructions. The machine readable medium may be non-transitory and may include, but is not limited to, flash memory, optical disks, CD-ROMs, DVD ROMs, RAMs, EPROMs, EEPROMs, magnetic or optical cards or any other type of machine-readable media suitable for storing electronic instructions. For example, example embodiments consistent with the present description may be downloaded as a computer program which may be transferred from a remote computer (e.g., a server) to a requesting computer (e.g., a client) by way of a communication link (e.g., a modem or network connection) and stored on a non-transitory storage medium. The machine readable medium may also or alternatively be a transmission medium by which instructions may be conveyed. A machine readable transmission medium may include carrier waves, transmission signals or the like. A machine readable transmission medium may convey instructions between components of a single computer system and/or between plural separate computer systems. The machine-readable medium may also be referred to as a processor-readable medium or a computer-readable medium.

Example embodiments consistent with the present description (or components or modules thereof) might be implemented in hardware, such as one or more field programmable gate arrays ("FPGA"s), one or more integrated circuits such as ASICs, one or more network processors, etc. Alternatively, or in addition, embodiments consistent with the present description (or components or modules thereof) might be implemented as stored program instructions executed by a processor. Such hardware and/or software might be provided in an addressed data (e.g., packet, cell, etc.) forwarding device (e.g., a switch, a router, virtual router, virtual forwarding device, etc.), or any device that has computing and/or networking capabilities.

### § 5.10 FURTHER EXAMPLES AND CONCLUSIONS

Therefore, from one perspective, there has been described an optional, new type of sequence number packets ("SNPs") called Hierarchical SNP ("HSNP") that can compress the traditional exchange of complete sequence number packets ("CSNPs") into a variant of Merkle tree is described. This allows devices (e.g., routers) running the Intermediate System Intermediate System ("IS-IS") interior gateway protocol ("IGP") to support very large databases and adjacency numbers. Such an approach should lead to much faster re synchronization of link state information in case of inconsistencies since only a subset of packets (compared to full scale CSNP exchange) is necessary to correct the entropy present. The techniques described can be adapted for checking distributed (e.g., link state) database coherency in other contexts, such as in other network discovery protocols.

Further examples of feature combinations taught by the present disclosure are set out in the following numbered clauses.

Clause 1. A computer implemented method for use in a system including a data forwarding device that runs a network discovery protocol and maintains a link state database, the computer implemented method comprising: generating, by the data forwarding device, a complete index of entries of the link state database (CIDBE); compressing, by the data forwarding device, the CIDBE received to generate a compressed CIDBE (CCIDBE); and transmitting, from the data forwarding device, the CCIDBE to a second data forwarding device, wherein the second data forwarding device is adjacent to the data forwarding device.

Clause 2. The computer implemented method of clause 1, wherein the act of compressing the CIDBE received to generate a CCIDBE is performed hierarchically.

Clause 3. The computer implemented method of clause 2, wherein the act of compressing the CIDBE received to generate a CCIDBE includes partitioning the CIDBE to generate CIDBE partitions (CIDBEPs), compressing each of the CIDBEPs to generate compressed CIDBEPs (CCIDBEPs), and compressing disjoint sets of CCIDBPs to generate the CCIDBE.

Clause 4. The computer implemented method of clause 2 or 3, wherein the CCIDBE is a Merkle tree root node.

Clause 5. The computer implemented method of clause 1, wherein the act of compressing the CIDBE received to generate a CCIDBE is performed recursively.

Clause 6. The computer implemented method of any preceding clause, further comprising: storing the CCIDBE in cache storage local to the data forwarding device.

Clause 7. The computer implemented method of any preceding claim, further comprising: receiving, by the second data forwarding device, the CCIDBE transmitted from the first data forwarding device; responsive to receiving the CCIDBE, comparing the CCIDBE received with a corresponding CCIDBE derived from a link state database maintained by the second data forwarding device to determine whether or not the link state database maintained by the second data forwarding device is congruent with the link state database maintained by the data forwarding device; and responsive to determining that the link state database maintained by the second data forwarding device is not congruent with the link state database maintained by the data forwarding device, performing one or more actions to synchronize the contents of link state database maintained by the data forwarding device and the link state database maintained by the second data forwarding device, and otherwise, responsive to determining that the link state database maintained by the second data forwarding device is congruent with the link state database maintained by the data forwarding device, not performing the one or more actions.

Clause 8. The computer implemented method of clause 7, wherein the act of compressing the CIDBE received to generate a CCIDBE includes partitioning the CIDBE to generate CIDBE partitions (CIDBEPs), compressing each of the CIDBEPs to generate compressed CIDBEPs (CCIDBEPs), and compressing disjoint sets of CCIDBPs to generate the CCIDBE, and wherein the act of performing one or more actions to synchronize the contents of link state database maintained by the data forwarding device and the link state database maintained by the second data forwarding device includes requesting and receiving at least one of the CCIDBEPs to isolate the incongruency, and requesting from the data forwarding device, or providing to the data forwarding device, one or more link state database entries causing the incongruency.

Clause 9. The computer implemented method of clause 8, wherein the one or more link state database entries causing the incongruency is requested or provided via a partial sequence number protocol data unit ("PSNP"), and wherein the act of partitioning the CIDBE is performed using ranges of system identifiers of link state protocol data units.

Clause 10. The computer implemented method of any preceding clause, wherein the network discovery protocol is Intermediate System Intermediate System ("IS-IS"), and wherein the CIDBE is at least one IS IS complete sequence number protocol date unit ("CSNP").

Clause 11. A computer implemented method for use in a data forwarding device that runs a network discovery protocol and maintains a link state database, the computer implemented method comprising: receiving, by the data forwarding device and transmitted from another data forwarding device, a compressed complete index of entries of a link state database ("CCIDBE") maintained by the other data forwarding device, wherein the other data forwarding device is adjacent to the data forwarding device; responsive to receiving the CCIDBE, comparing the CCIDBE received with a corresponding CCIDBE derived from a link state database maintained by the data forwarding device to determine whether or not the link state database maintained by the data forwarding device is congruent with the link state database maintained by the other data forwarding device; and responsive to determining that the link state database maintained by the data forwarding device is not congruent with the link state database maintained by the other data forwarding device, performing one or more actions to synchronize the contents of link state database maintained by the data forwarding device and the link state database maintained by the other data forwarding device, and otherwise, responsive to determining that the link state database maintained by the data forwarding device is congruent with the link state database maintained by the other data forwarding device, not performing the one or more actions.

Clause 12. The computer implemented method of clause 11, wherein the network discovery protocol is Intermediate System Intermediate System ("IS-IS"), and wherein the compressed complete index of entries of a link state database ("CCIDBE") is at least one IS-IS complete sequence number protocol date unit ("CSNP"), after compression.

Clause 13. The computer implemented method of clause 11, wherein the CCIDBE is a Merkle tree root node.

Clause 14. A system comprising: a data forwarding device that runs a network discovery protocol and maintains a link state database, the data forwarding device including at least one processor, and a computer readable storage medium storing program instructions which, when executed by the at least one processor, cause the at least one processor to: receive, by the data forwarding device, a complete index of entries of the link state database (CIDBE); compress, by the data forwarding device, the CIDBE received to generate a compressed CIDBE (CCIDBE); and transmit, from the data forwarding device, the CCIDBE to a second data forwarding device, wherein the second data forwarding device is adjacent to the data forwarding device.

Clause 15. The system of clause 14, wherein the act of compressing the CIDBE received to generate a CCIDBE is performed hierarchically.

Clause 16. The system of clause 15, wherein the act of compressing the CIDBE received to generate a CCIDBE includes - partitioning the CIDBE to generate CIDBE partitions (CIDBEPs), - compressing each of the CIDBEPs to generate compressed CIDBEPs (CCIDBEPs), and - compressing disjoint sets of CCIDBPs to generate the CCIDBE.

Clause 17. The system of clause 15 or 16, wherein the CCIDBE is a Merkle tree root node.

Clause 18. The system of clause 14, wherein the act of compressing the CIDBE received to generate a CCIDBE is performed recursively.

Clause 19. The system of any of clauses 14 to 18, wherein the method further includes: - storing the CCIDBE in cache storage local to the data forwarding device.

Clause 20. The system of any of clauses 14 to 19, further comprising: a second data forwarding device including at least one processor, and a computer readable storage medium storing program instructions which, when executed by the at least one processor, cause the at least one processor of the second data forwarding device to: receive, by the second data forwarding device, the CCIDBE transmitted from the first data forwarding device; responsive to receiving the CCIDBE, comparing the CCIDBE received with a corresponding CCIDBE derived from a link state database maintained by the second data forwarding device to determine whether or not the link state database maintained by the second data forwarding device is congruent with the link state database maintained by the data forwarding device; and responsive to determining that the link state database maintained by the second data forwarding device is not congruent with the link state database maintained by the data forwarding device, performing one or more to synchronize the contents of link state database maintained by the data forwarding device and the link state database maintained by the second data forwarding device, and otherwise, responsive to determining that the link state database maintained by the second data forwarding device is congruent with the link state database maintained by the data forwarding device, not performing the one or more actions.

The present inventors consider their inventive contribution to include any patentable subject matter described in the present description. For example, the process(es) described applies to any protocol that takes something along the lines of "system ID" that consists of multiple fragments and then packs it into such a "cross-over of Merkle and skip list." Although "self-invertive" hashes (e.g., XOR) are described, other hash functions can be used instead. (Note that although a far more complex self-invertive hash function based on modulo groups can be used, it is believed that they provide no significant advantage, and that XOR will be much faster on today's silicon.) Further, although Merkle trees and Skip lists were described, other alternative processes for compressing link state information into a hierarchical data structure (e.g., for purposes of checking synchronization/coherence) can be used instead. Any hierarchical data structure that replaces the CSNP mechanism may be useful for scaling.

## Claims

1. A computer-implemented method for use in a system including a data forwarding device that runs a network discovery protocol and maintains a link state database, the computer-implemented method comprising:
a) generating, by the data forwarding device, a complete index of entries of the link state database (CIDBE);
b) compressing, by the data forwarding device, the CIDBE received to generate a compressed CIDBE (CCIDBE); and
c) transmitting, from the data forwarding device, the CCIDBE to a second data forwarding device, wherein the second data forwarding device is adjacent to the data forwarding device.

2. The computer-implemented method of claim 1, wherein the act of compressing the CIDBE received to generate a CCIDBE is performed hierarchically, and preferably includes
1) partitioning the CIDBE to generate CIDBE partitions (CIDBEPs),
2) compressing each of the CIDBEPs to generate compressed CIDBEPs (CCIDBEPs), and
3) compressing disjoint sets of CCIDBPs to generate the CCIDBE.

3. The computer-implemented method of any one of claims 1-2, wherein the act of compressing the CIDBE received to generate a CCIDBE is performed recursively.

4. The computer-implemented method of any one of claims 1-3, further comprising:
- storing the CCIDBE in cache storage local to the data forwarding device.

5. The computer-implemented method any one of claims 1-4, further comprising:
d) receiving, by the second data forwarding device, the CCIDBE transmitted from the first data forwarding device;
e) responsive to receiving the CCIDBE, comparing the CCIDBE received with a corresponding CCIDBE derived from a link state database maintained by the second data forwarding device to determine whether or not the link state database maintained by the second data forwarding device is congruent with the link state database maintained by the data forwarding device; and
f) responsive to determining that the link state database maintained by the second data forwarding device is not congruent with the link state database maintained by the data forwarding device,
- performing one or more actions to synchronize the contents of link state database maintained by the data forwarding device and the link state database maintained by the second data forwarding device, and
otherwise, responsive to determining that the link state database maintained by the second data forwarding device is congruent with the link state database maintained by the data forwarding device, not performing the one or more actions.

6. The computer-implemented method of claim 5, wherein the act of compressing the CIDBE received to generate a CCIDBE includes
1) partitioning the CIDBE to generate CIDBE partitions (CIDBEPs),
2) compressing each of the CIDBEPs to generate compressed CIDBEPs (CCIDBEPs), and
3) compressing disjoint sets of CCIDBPs to generate the CCIDBE, and
wherein the act of performing one or more actions to synchronize the contents of link state database maintained by the data forwarding device and the link state database maintained by the second data forwarding device includes
1) requesting and receiving at least one of the CCIDBEPs to isolate the incongruency, and
2) requesting from the data forwarding device, or providing to the data forwarding device, one or more link state database entries causing the incongruency,
wherein the one or more link state database entries causing the incongruency is requested or provided via a partial sequence number protocol data unit ("PSNP"), and
wherein the act of partitioning the CIDBE is performed using ranges of system identifiers of link state protocol data units.

7. The computer-implemented method of any one of claims 1-6, wherein the network discovery protocol is Intermediate System-Intermediate System ("IS-IS"), and
wherein the CIDBE is at least one IS-IS complete sequence number protocol date unit ("CSNP").

8. A computer-implemented method for use in a data forwarding device that runs a network discovery protocol and maintains a link state database, the computer-implemented method comprising:
a) receiving, by the data forwarding device and transmitted from another data forwarding device, a compressed complete index of entries of a link state database ("CCIDBE") maintained by the other data forwarding device, wherein the other data forwarding device is adjacent to the data forwarding device;
b) responsive to receiving the CCIDBE, comparing the CCIDBE received with a corresponding CCIDBE derived from a link state database maintained by the data forwarding device to determine whether or not the link state database maintained by the data forwarding device is congruent with the link state database maintained by the other data forwarding device; and
c) responsive to determining that the link state database maintained by the data forwarding device is not congruent with the link state database maintained by the other data forwarding device,
- performing one or more actions to synchronize the contents of link state database maintained by the data forwarding device and the link state database maintained by the other data forwarding device, and
otherwise, responsive to determining that the link state database maintained by the data forwarding device is congruent with the link state database maintained by the other data forwarding device, not performing the one or more actions.

9. The computer-implemented method of claim 8, wherein the network discovery protocol is Intermediate System Intermediate System ("IS-IS"), and
wherein the compressed complete index of entries of a link state database ("CCIDBE") is at least one IS-IS complete sequence number protocol date unit ("CSNP"), after compression.

10. A system comprising:
a) a data forwarding device that runs a network discovery protocol and maintains a link state database, the data forwarding device including
1) at least one processor, and
2) a computer-readable storage medium storing program instructions which, when executed by the at least one processor, cause the at least one processor to:
A) receive, by the data forwarding device, a complete index of entries of the link state database (CIDBE);
B) compress, by the data forwarding device, the CIDBE received to generate a compressed CIDBE (CCIDBE); and
C) transmit, from the data forwarding device, the CCIDBE to a second data forwarding device, wherein the second data forwarding device is adjacent to the data forwarding device.

11. The system of claim 10, wherein the act of compressing the CIDBE received to generate a CCIDBE is performed hierarchically, and preferably includes
- partitioning the CIDBE to generate CIDBE partitions (CIDBEPs),
- compressing each of the CIDBEPs to generate compressed CIDBEPs (CCIDBEPs), and
- compressing disjoint sets of CCIDBPs to generate the CCIDBE.

12. The system of any one of claims 10-11, wherein the CCIDBE is a Merkle tree root node.

13. The system of any one of claims 10-12, wherein the act of compressing the CIDBE received to generate a CCIDBE is performed recursively.

14. The system of any one of claims 10-13, wherein the method further includes:
- storing the CCIDBE in cache storage local to the data forwarding device.

15. The system of any one of claims 10-14, further comprising:
b) a second data forwarding device including
1) at least one processor, and
2) a computer-readable storage medium storing program instructions which, when executed by the at least one processor, cause the at least one processor of the second data forwarding device to:
A) receive, by the second data forwarding device, the CCIDBE transmitted from the first data forwarding device;
B) responsive to receiving the CCIDBE, comparing the CCIDBE received with a corresponding CCIDBE derived from a link state database maintained by the second data forwarding device to determine whether or not the link state database maintained by the second data forwarding device is congruent with the link state database maintained by the data forwarding device; and
C) responsive to determining that the link state database maintained by the second data forwarding device is not congruent with the link state database maintained by the data forwarding device,
- performing one or more to synchronize the contents of link state database maintained by the data forwarding device and the link state database maintained by the second data forwarding device, and
otherwise, responsive to determining that the link state database maintained by the second data forwarding device is congruent with the link state database maintained by the data forwarding device, not performing the one or more actions.
